# EUROPEAN PATENT APPLICATION

(11) **EP 4 528 579 A1**
(43) Date of publication of application: **26.03.2025**
(21) Application number: 24183935.6
(22) Date of filing: 24.06.2024
(51) Int. Cl.: G06F 40/44, G06F 40/58, G06V 20/20

(54) **BILINGUAL MULTITASK MACHINE TRANSLATION MODEL FOR LIVE TRANSLATION ON ARTIFICIAL REALITY DEVICES**

(30) Priority: 21.09.2023 US 202318471568
(71) Applicant: Meta Platforms, Inc., Menlo Park, CA 94025 (US)
(72) Inventor: Ahmed, Zeeshan, Menlo Park (US); Seide, Frank Torsten Bernd, Menlo Park (US); Shi, Yangyang, Menlo Park (US)
(74) Representative: Murgitroyd & Company

(57) **Abstract**

Head-mounted displays may include a machine translation model designed to recognize text through optical character recognition or automatic speech recognition, and may translate the text from its original language to another language. The machine translation model may be trained to modify source text using various tasks, thus allowing the machine translation model to learn different versions of the source text in several different versions. The source text and a variation(s) derived from a task(s) may be mapped to a target text, representing the properly translated and formatted version of the source text. The machine translation model may provide a single model, to facilitate machine translation, implemented on the head-mounted display. Also, the machine translation model may include a bilingual machine translation model that may translate source text from one language to another language, and vice versa.

## Description

### TECHNICAL FIELD

This application is directed to head-mounted displays, and in particular, to head-mounted displays with a display and a trained machine translation model utilized to translate text from one language to another language and present the translated language on the display.

### BACKGROUND

Machine translation is designed to translate one language to another language. This may assist, for example, individuals traveling to another country in which they do not speak the commonly spoken language in that country. Some machine translation devices are trained using written text or automatic speech recognition.

### SUMMARY

Some examples of the present disclosure are directed to a head-mounted display that includes translate language, using a machine translation model, detected in an environment and may translate the detected language to another language. The machine translation model may be trained by a variety of mechanisms using different text modes that produce different word sequences.

According to a first aspect, there is provided a head-mounted display comprising: an image sensor; a machine translation model stored on a memory; and one or more processors configured to provide one or more commands, wherein the one or more commands comprise: obtaining, from the image sensor, one or more images comprising text in a first language; instructing the machine translation model to i) format the text and ii) translate the text from the first language to a second language different from the first language; and outputting, by the head-mounted display, at least one image or at least one video, wherein the at least one image or the at least one video comprises the text in the second language.

The machine translation model may be trained based on: obtaining a source text; converting, based on a plurality of tasks, the source text into a plurality of word sequences; generating, from the source text, a target text, wherein the target text comprises a formatted version of the source text in the second language; and mapping one or more word sequences of the plurality of word sequences to the target text.

The plurality of tasks may comprise: incorporating punctuation into the source text; and capitalizing one or more letters of the source text.

The plurality of tasks may further comprise: applying text normalization to the source text; and generating a copy of the source text.

The plurality of tasks may further comprise applying inverse text normalization to the source text.

The machine translation model, when executed by the one or more processors, may be further configured to, in response to the text being in the first language and the second language, output the text in the first language and the second language.

The machine translation model, when executed by the one or more processors, may be further configured to: determine a first word of the text; map the first word to a language selected from one of the first language or the second language to generate a mapped language; and output, by the head-mounted display, the first word in the mapped language.

The head-mounted display may further comprise a speaker. The one or more commands may further include outputting, by the speaker, the text in the second language.

According to a second aspect, there is provided a method comprising: obtaining a source text in a first language; converting, based on a plurality of tasks, the source text into a plurality of word sequences; generating, from the source text, a target text, wherein the target text comprises a formatted version of the source text in a second language different from the first language; and mapping one or more word sequences of the plurality of word sequences to the target text.

The converting the source text into the plurality of tasks may comprise modifying, based on the plurality of tasks, the source text to a respective word sequence of the plurality of word sequences.

The plurality of tasks may comprise: a first task comprising punctuation in the source text; a second task comprising a capitalization of one or more letters of one or more words of the source text; and a third task comprising a lower case of the one or more letters of the one or more words of the source text and removal of the punctuation of the source text.

The plurality of tasks may further comprise a fourth task comprising a copy of the source text.

The plurality of tasks may further comprise a fifth task comprising an inverse text normalization of the source text.

The method may further comprise: providing the target text to a head-mounted display; and outputting, by the head-mounted display, the target text.

The obtaining the source text may comprise, obtaining, by one or more image sensors of the head-mounted display, an image that comprises the source text.

The converting the source text into the plurality of word sequences may comprise providing a machine translation model of a head-mounted display to convert with a plurality of tasks.

According to a third aspect, there is provided a computer-readable medium storing instructions that, when executed by a processor, cause the processor to carry out the method of the second aspect. The medium may be non-transitory.

According to a fourth aspect, there is provided a computer program product comprising instructions which, when the program is executed by a processor of a computer, cause the processor to carry out the method of the second aspect.

Also described is a system comprising a processor configured to carry out the method of the second aspect.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

Certain features of the subject technology are set forth in the appended claims. However, for purpose of explanation, several examples of the subject technology are set forth in the following figures.
FIG. 1, FIG. 2, and FIG. 3 illustrate examples of head-mounted displays, in accordance with aspects of the present disclosure.
FIG. 4 illustrates an application of a head-mounted display, in accordance with aspects of the present disclosure.
FIG. 5 illustrates a schematic diagram of a head-mounted display, in accordance with aspects of the present disclosure.
FIG. 6 illustrates a block diagram showing an exemplary task for training a machine translation model using multiple text modes to generate multiple respective word sequences, in accordance with aspects of the present disclosure.
FIG. 7 illustrates a block diagram showing a task for training a machine translation model to translate from language to another language, in accordance with aspects of the present disclosure.
FIG. 8 illustrates a block diagram showing a task for training a machine translation model to translate back to the prior language, in accordance with aspects of the present disclosure.
FIG. 9 illustrates a block diagram showing a task for training a machine translation model to recognize proper nouns and the order of phrases in different languages, in accordance with aspects of the present disclosure.
FIG. 10 illustrates a block diagram showing a task for training a machine translation model to recognize text normalization, in accordance with aspects of the present disclosure.
FIG. 11 illustrates a block diagram showing a task for training a machine translation model to recognize source text in two different languages, in accordance with aspects of the present disclosure.
FIG. 12 illustrates a block diagram showing a task for training a machine translation model to translate from language to another language, in accordance with aspects of the present disclosure.
FIG. 13 illustrates an example flowchart illustrating operations for devices that may include head-mounted displays used to translate languages and present the translated languages, in accordance with aspects of the present disclosure.
FIG. 14 illustrates an example machine learning framework including machine translation model and training database, in accordance with aspects of the present disclosure.

### DETAILED DESCRIPTION

Some examples of the present disclosure will now be described more fully hereinafter with reference to the accompanying drawings, in which some, but not all examples of the disclosure are shown. Indeed, various examples of the disclosure may be embodied in many different forms and should not be construed as limited to the examples set forth herein. Like reference numerals refer to like elements throughout. As used herein, the terms "data," "content," "information" and similar terms may be used interchangeably to refer to data capable of being transmitted, received and/or stored in accordance with examples of the disclosure. Moreover, the term "exemplary," as used herein, is not provided to convey any qualitative assessment, but instead merely to convey an illustration of an example. Thus, use of any such terms should not be taken to limit the scope of examples of the present application. It is to be understood that the methods and systems described herein are not limited to specific methods, specific components, or to particular implementations.

As defined herein a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop and/or engage in various other activities within the virtual spaces, including through the use of Augmented Reality (AR)/Virtual Reality (VR)/Mixed Reality (MR).

Also, as used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another example includes from the one particular value and/or to the other particular value. Similarly, when values are expressed as approximations, by use of the antecedent "about," it will be understood that the particular value forms another example. All ranges are inclusive and combinable. It is to be understood that the terminology used herein is for the purpose of describing particular aspects only, and is not intended to be limiting.

It is to be appreciated that certain features of the disclosed subject matter which are, for clarity, described herein in the context of separate examples, can also be provided in combination in a single example. Conversely, various features of the disclosed subject matter that are, for brevity, described in the context of a single example, can also be provided separately, or in any sub-combination. Further, any reference to values stated in ranges includes each and every value within that range. Any documents cited herein are incorporated herein by reference in their entireties for any and all purposes.

It is to be understood that the methods and systems described herein are not limited to specific methods, specific components, or to particular implementations. It is also to be understood that the terminology used herein is for the purpose of describing particular examples only and is not intended to be limiting.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an example, the example, another example, some examples, one or more examples, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other embodiments. Furthermore, to the extent that the term "include", "have", or the like is used in the description or the claims, such term is intended to be inclusive in a manner similar to the term "comprise" as "comprise" is interpreted when employed as a transitional word in a claim. References in this description to "an example", "one example", or the like, may mean that the particular feature, function, or characteristic being described is included in at least one example of the present embodiments. Occurrences of such phrases in this specification do not necessarily all refer to the same example, nor are they necessarily mutually exclusive.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112, sixth paragraph, unless the element is expressly recited using the phrase "means for" or, in the case of a method claim, the element is recited using the phrase "step for".

The subject technology is directed to a head-mounted display (HMD) with a machine translation model for live translation of text from one language to another, different language, and providing the translated text at a display for a user of the HMD. Machine translation models described herein may be trained by providing the machine translation model with several tasks. For an exemplary task (e.g., training exercise), the machine translation model(s) may be provided with a source text (e.g., a sequence of text prior to translation) in the form of written text in a language, as well as target text, representing a translation of the source text to another language. The target text may also represent a language translation with properly formatted text. For example, the target text may include correct capitalization, punctuation, normalization (e.g., text normalization, inverse text normalization), order of wording, etc., in the translated language. The machine translation model(s) is trained to serve various tasks. For training each task(s), the source text may be converted to multiple word sequences, generating a dataset (e.g., word sequence) for model training. The machine translation model(s) may learn several variations of the source text from the generated datasets and may also learn how the source text should be correctly translated and formatted. Beneficially, when incorporated into an HMD, the machine translation model(s) may have the ability to translate text in written or spoken form in real time, or near real time, that a user of the HMD may otherwise not comprehend without the translation. Moreover, the machine translation model(s), once trained, may be stored on the HMD, thus allowing the HMD to provide machine translation capabilities using the machine translation model(s) (e.g., a local module) as opposed to communicating with a remote or cloud-based server for each translation operation.

Additionally, the machine translation model(s) may be trained on a bilingual multi-task dataset, thus learning multiple tasks at the same time and in two different language directions (e.g., English to Spanish and Spanish to English). The machine translation model(s) may be given a task of deriving the source text using the task. Each task may function as a specific tool to produce a variation of the source text. Accordingly, each task may include different instructions and/or parameters, and may derive a different version of the (original) source text. Each derived version of the source text may be mapped to the target text. Thus, for n tasks, the machine translation model(s) may be trained by deriving n different versions of the source text, representing n different inputs mapped to the target text.

Several tasks may be implemented to train the machine translation model(s). For example, one task may include using a surface form (e.g., regularly written text formatted with punctuation, capitalization, and numerals) as the source text. Another exemplary task may include an output from an automatic speech recognition (ASR) as the source text called ASR form. For example, for a source text stating "I paid $200 on May 1 st.", an ASR system may derive "i paid two hundred dollars on may first". The machine translation model(s) may be trained on ASR form by applying text normalization to the source text. Another exemplary task may include converting the source text into an upper case format by capitalizing each letter of each word in the source text. Yet another exemplary task may include applying a copy through in which the source text is copied through in the same language. Still, yet another exemplary task may include applying a combination of punctuation, capitalization, and inverse text normalization to the source text. For example, for a source text stating "My team received one hundred dollars two years ago", application of a punctuation, capitalization, and inverse text normalization format may derive "My team received $100 2 years ago." In some examples, the task is part of a multi-task exercise that translates each dataset derived from each task from one language to another language, creating a paired sequences of datasets in each language. The input (e.g., source text) and resultant output (e.g., dataset) from each task may be merged together to train the machine translation model. Accordingly, for a given source text, the machine translation model(s) may be trained on different and unique versions of the source text. Moreover, not only is the machine translation model(s) trained using a source text used in one language, but is also trained using the same source text in another language. Thus, the machine translation model(s) is trained on words, as well as various, nuanced word sequences, and in different languages. Beneficially, an HMD equipped with the trained machine translation model(s) may perform live translations with enhanced accuracy, as compared other forms of translation models that are trained with fewer and relatively simpler tasks.

In some exemplary implementations, respective datasets output from each task(s) are provided in equal amounts to the machine translation model(s). For example, for m tasks, the respective datasets output from each task are provided, as a fraction of 1 /m, to train the machine translation model(s), thus providing for equal learning for the machine translation model(s). However, this may be adjusted by weighting one or more respective datasets over other datasets. Also, for the m tasks, a dataset in each direction (e.g., for two languages) is derived. As a result, the machine translation model(s) may provide 2*m directional translation capabilities. For example, for 5 tasks used to train the machine translation model(s), the machine translation model(s) may provide 10-directional translation capabilities.

Additionally, the source text used to train machine translation models described herein may include word sequences (e.g., phrases, sentences) designed to provide specific training. For example, some words are spelled and/or pronounced similarly in two different languages. By training the machine translation model(s) with these words in different sequences, the machine translation model(s) may learn which language the word in the source text is likely to be. Additionally, subsequent to training the machine translation model(s) and storing the machine translation model(s) on an HMD, the machine translation model(s) may represent a single model that provides all text translation functionality. Beneficially, the memory on the head-mounted device dedicated to the machine translation model(s) may be relatively small. Moreover, as a single model, the machine translation model(s) may minimize the processing operations and associated battery life of the HMD.

Head-mounted displays equipped with machine translation models described herein offer several additional advantages. For example, the machine translation model(s) may be trained on a source text by a variety of task, thus allowing the machine translation model(s) to better understand context of source text. Additionally, the machine translation model(s) may be trained with source text written in two different languages.

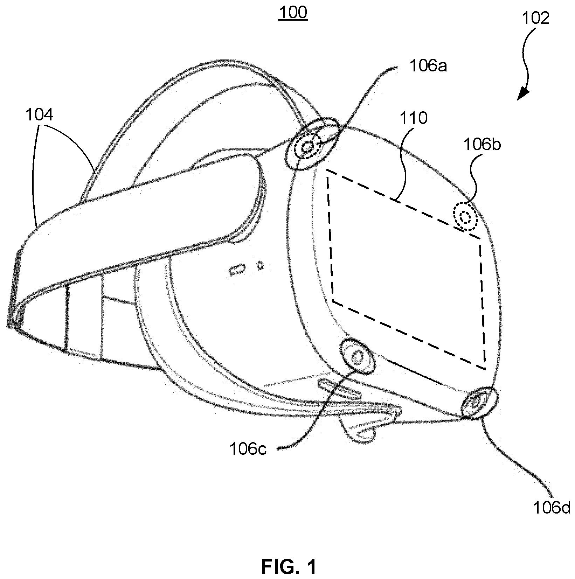

These and other examples are discussed below with reference to FIGS. 1-14. However, those skilled in the art will readily appreciate that the detailed description given herein with respect to these Figures is for explanatory purposes only and should not be construed as limiting.

FIG. 1 illustrates an example of an artificial reality system 100. In some examples, the artificial reality system 100 may be used for VR applications and/or Augmented Reality (AR)/Mixed Reality (MR) applications. In some examples, the artificial reality system 100 may operate within, or be associated with, a Metaverse network. As shown, the artificial reality system 100 may include an HMD 102. The HMD 102 may include a head strap 104 (also referred to herein as head band) used to fit the HMD 102 onto a user's head. The HMD 102 may further include several image sensors. For example, the HMD 102 may include an image sensor 106a, an image sensor 106b, an image sensor 106c, and an image sensor 106d and each of the image sensors may be representative of an additional image sensor(s). In some examples, each of the image sensors 106a, 106b, 106c, and 106d may take the form of a camera designed to capture images (e.g., still images, motion images (e.g., video)) of the environment surrounding the HMD 102. Further, in some examples, a compressible shock absorbing device (not shown in FIG. 1) may be mounted on each of the image sensors 106a, 106b, 106c, and 106d. The shock absorbing device may be configured to substantially maintain the structural integrity of the image sensors 106a, 106b, 106c, and 106d in case an impact force is imparted on image sensors 106a, 106b, 106c, and 106d. In some examples, each of the image sensors 106a, 106b, 106c, and 106d may be pivotally and/or translationally mounted to the HMD 102 to pivot the image sensors 106a, 106b, 106c, and 106d at a range of angles and/or to allow for translation in multiple directions, in response to an impact. Also, each of the image sensors 106a, 106b, 106c, and 106d may protrude from a surface (e.g., a front surface, a corner surface, etc.) of the HMD 102 so as to provide the image sensors 106a, 106b, 106c, and 106d with, for example, an increased field of view (e.g., at least 180 degrees field of view), thus allowing the image sensors 106a, 106b, 106c, and 106d to view a relatively greater number of objects (e.g., a hand, a user, a surrounding real-world environment, etc.).

Also, the HMD 102 may further include a display 110 designed to present visual information based on an artificial reality system application(s) (e.g., VR) and/or AR application(s) as well as MR application(s). Additionally or alternatively, the display 110 may be coupled (e.g., electrically coupled) to each of the image sensors 106a, 106b, 106c, and 106d, and may present visual information in the form of an external environment, as captured by one or more of the image sensors 106a, 106b, 106c, and 106d. Using one or more of the image sensors 106a, 106b, 106c, and 106d, the HMD 102 may receive text on various media (e.g., paper, canvas, billboard, etc.), translate the received text from one language to another language, and present the translated text onto the display 110.

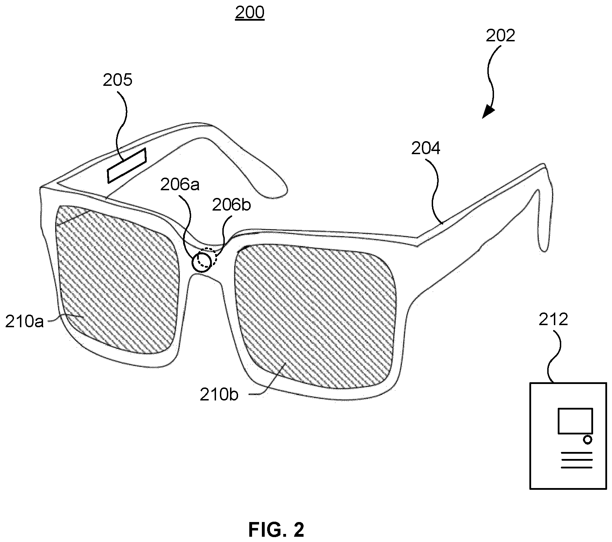

FIG. 2 illustrates an example of an artificial reality system 200. The artificial reality system 200 may include an HMD 202 (e.g., glasses (e.g., smart glasses)) that includes a frame 204 that may be placed on a user's head, including on a user's ears and nose. The frame 204 may carry or hold several components. For example, the frame 204 may hold an audio device 205. In some examples, the audio device 205 takes the form of a microphone designed to receive and convert ambient and/or user-based sounds into electrical signals. In this regard, the audio device 205 may provide sound waves (e.g., acoustical energy) in conjunction with artificial reality content. In some examples, the audio device 205 takes the form of audio speakers designed to convert electrical signals into sound waves. In some examples, the audio device 205 may be a combination of a microphone and an audio speaker(s). The audio device 205 is shown at a single, particular location on the frame 204. However, the audio device 205 may generally be positioned at other locations of the frame 204. Also, the HMD 202 may include additional audio devices having any feature shown and described for the audio device 205, and may be positioned at different locations on the frame 204.

The HMD 202 may further include one or more image sensors used to capture images and videos of environments. For example, the HMD 202 may include an image sensor 206a (e.g., front camera) used to capture an environment (e.g., real-world environment) at which a user of the HMD 202 is viewing. The HMD 202 may also include an image sensor 206b (e.g., rear camera, an eye tracking system) to, for example, track the vergence movement of the user wearing the HMD 202. The HMD 202 may include a display 210a and a display 210b held by the frame 204. Similar to the display 110 (shown in FIG. 1), each of the displays 210a and 210b may be used by the HMD 202 to present translated text, with the translated text representing a language translation of text received by the image sensor 206a.

The artificial reality system 200 may further include a computing device 212 that includes a trackpad and/or one or more buttons. The computing device 212 may receive inputs from users and relay the inputs to the HMD 202. The computing device 212 may also provide haptic feedback to users. The computing device 212 may be connected to the HMD 202 through a wired (e.g., cable) or wireless connections (e.g., BLUETOOTH^{®} connection, WI-FI^{®} connection). In this regard, the HMD 202 and the computing device 212 may each be equipped with wired or wireless communication capabilities. Also, the computing device 212 may control the HMD 202 to, for example, provide VR, AR, MR content to the displays 210a and 210b, including translated text. In some examples, the computing device 212 may be a standalone host computing device (e.g., smartphone) with a controller. Alternatively, the computing device 212 (or several components thereof) may be integrated within the HMD 202. Generally, the computing device 212 may take the form of any hardware platform capable of providing artificial reality content and receiving inputs from users.

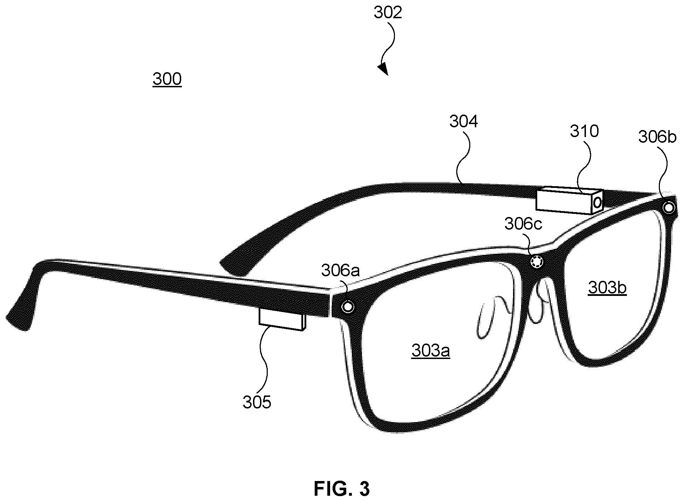

FIG. 3 illustrates an example of an artificial reality system 300 that takes the form of a HMD 302 associated with artificial reality content. The HMD 302 may include an enclosure 304 (e.g., an eyeglass frame). The HMD 302 may further include a lens 303a and a lens 303b, each of which is held by the enclosure 304. In some examples, the HMD 302 is implemented in the form of augmented-reality glasses. Accordingly, each of the lenses 303a and 303b may be at least partially transparent to visible light to allow a user of the HMD 302 to view a real-world environment through each of the lenses 303a and 303b. Also, the HMD 302 may include an audio device 305. In some examples, the audio device 305 takes the form of one or more microphones designed to receive and convert ambient and/or user-based sounds into electrical signals. In some examples, the audio device 305 takes the form of one or more audio speakers designed to convert electrical signals into sound waves (e.g., acoustical energy). In some examples, the audio device 305 is a combination of a microphone(s) and an audio speaker(s). Accordingly, the audio device 305 may provide electrical signals and/or sound waves in conjunction with the artificial reality content provided by the HMD 302. The audio device 305 is shown at a single, particular location on the enclosure 304. However, the audio device 305 may generally be positioned at other locations of the enclosure 304. Also, the HMD 302 may include additional audio devices having any feature shown and described for the audio device 305, and may be positioned at different locations on the enclosure 304.

Additionally, the HMD 302 may include one or more image sensors. For example, the HMD 302 may include an image sensor 306a and an image 306b, each of which may be representative of one or more additional image sensors. Each of the image sensors 306a and 306b may be referred as a front camera that functions to capture an environment (e.g., real-world environment) at which a user of the HMD 302 is viewing. The HMD 302 may also include an image sensor 306c (e.g., rear camera, an eye tracking system) used to, for example, track the vergence movement of the user wearing the HMD 302.

The HMD 302 may further include a display 310 (e.g., projector) designed to project visual content onto the lens 303a and/or the lens 303b, which may be subsequently reflected to the user's eyes. As non-limiting examples, the visual content may include textual information, still images, and/or motion images (e.g., video). Accordingly, when the HMD 302 takes the form of augmented-reality glasses, a user may view both a real-world environment as well as the visual content, provided by the display 310, superimposed over the real-world environment.

Although a particular design of the HMD 302 is shown, the HMD 302 may take other forms. For example, the HMD 302 may include a strap, or band, that wraps around a user's head. Alternatively, or in combination, the HMD 302 may include a single lens.

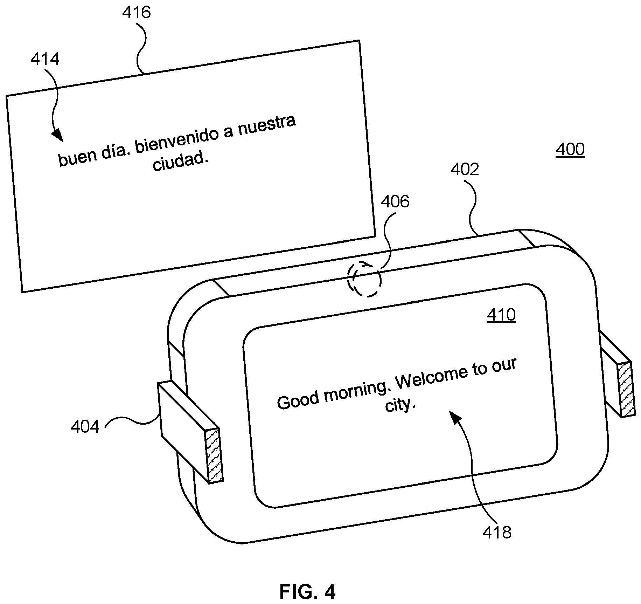

FIG. 4 illustrates an example of an artificial reality system 400. The artificial reality system 400 may include an HMD 402 (e.g., glasses (e.g., smart glasses)) that includes a head strap 404 (partially shown) that may be placed on and/or over a user's head. The HMD 402 may further include an image sensor 406, representative of one or more image sensors. The HMD 402 may further include a display 410. In an exemplary use case, the image sensor 406 may obtain an image of text 414 written on a surface 416 (e.g., paper). The HMD 402 may use the image obtained by the image sensor 406 to determine the text 414. For example, the HMD 402 may use optical character recognition (OCR) to determine the text 414. The HMD 402 may translate the text 414 (shown in Spanish in the example) and present translated text 418 (shown in English in the example) on the display 410. The translated text 418 may be presented in real time or near real time, as captured by the image sensor 406, on the display 410. Also, the translated text 418 may be presented in whole (as shown in FIG. 4) or may scroll word-by-word across the display 410 (e.g., from left to right or vice versa), and at any location across the display 410. Additionally, the display 410 may present background imagery behind the translated text 418, including computer imagery, a real-world environment, or a combination thereof.

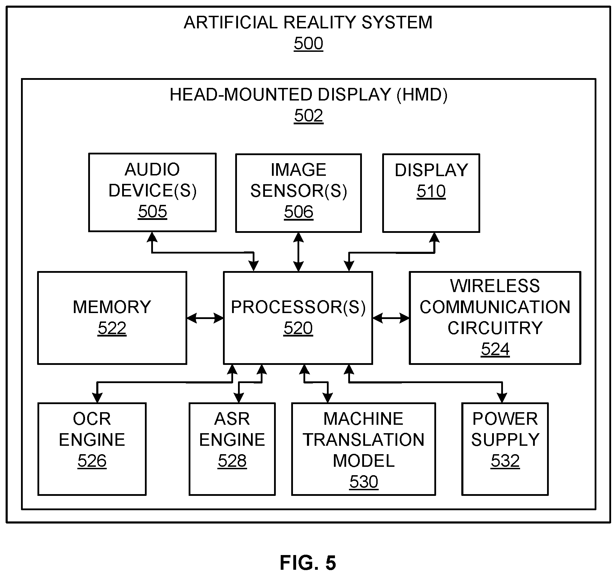

FIG. 5 illustrates a schematic diagram of an artificial reality system 500 that includes an HMD 502. The HMD 502 may be part of an artificial reality system 500 similar to those shown and/or described herein. Further, the HMD 502 may include any features described herein for an HMD. Additionally, HMDs shown and/or described herein may include any features shown and described for the HMD 502.

The HMD 502 may include one or more processors 520 designed to provide one or more commands to the components of the HMD 502 shown and described herein. The one or more processors 520 may include one or more microcontrollers, one or more micro electromechanical systems (MEMS), a central processing unit, a graphics processing unit, an integrated circuit (e.g., system on a chip, or SOC), or a combination thereof. The arrows shown in FIG. 5 indicate the one or more processors 520 are in communication (e.g., electrical communication) with the various features and components of the HMD 502 shown and described below.

The HMD 502 may further include memory 522. The memory 522 may include read-only memory (ROM) and/or random access memory (RAM). The memory 522 may store instructions that can be executed by the one or more processors 520. For example, the memory 522 can store instructions for VR applications, AR applications, MR applications and/or the like that are executable by the one or more processors 520. Further, the one or more processors 520 and the memory 522 may be incorporated into the HMD 502 (e.g., a device similar to the HMD 102 shown in FIG. 1). Alternatively, the one or more processors 520 and the memory 522 may be incorporated into a computing device (e.g., a device similar to the computing device 212 shown in FIG. 2) that may be separate from the HMD 502. In this regard, the HMD 502 may further include wireless communication circuitry 524 configured to establish and communicate through a wireless connection (e.g., BLUETOOTH^{®} connection, WI-FI^{®} connection). However, a wired communication between the HMD 502 and another device is also possible.

The HMD 502 may further include one or more audio devices 505. The one or more audio devices 505 may take the form of one or more audio transducers. In some examples, the one or more audio devices 505 include a microphone designed to convert received soundwaves into electrical signals. Further, in some examples, the one or more audio devices 505 include an audio speaker designed to convert electrical signals into soundwaves that may be heard by a user of the HMD 502. The one or more audio devices 505 may include a combination of a microphone(s) and an audio speaker(s).

The HMD 502 may further include one or more image sensors 506 used to obtain images (e.g., still images, motion images (video)) external to the HMD 502. In some examples, the one or image sensors 506 include a camera(s) designed to capture images of the environment external to the HMD 502. In some examples, the one or more image sensors 506 is used to capture images of text (e.g. written language).

The HMD 502 may further include a display 510. The display 510 may take the form of a light emitting diode (LED) display (e.g. OLED display, micro OLED), a liquid crystal display (LCD), a plasma display, or a projector, as non-limiting examples. The display 510 may present visual information, such as translated text (as a non-limiting example). In this regard, the HMD 502 may further include an OCR engine 526 designed to analyze images captured by the one or more image sensor 506 for text (e.g., words, phrases, sentences). Additionally, the HMD 502 may further include an ASR engine 528 designed to recognize and translate spoken language, obtained by the one or more audio devices 505, into text. In some examples, the OCR engine 526 and/or the ASR engine 528 is stored on the memory 522. Further, the some examples, the OCR engine 526 and/or the ASR engine 528 is implemented in hardware and run on the one or more processors 520.

Additionally, the HMD 502 may further include a machine translation model 530 designed to translate text from one language to another language. The term "language" as used herein may refer to commonly accepted words spoken and/or written for human communication. Non-limiting examples of language include English and Spanish. In some examples, the HMD 502 uses the OCR engine 526 to determine text from one or more images captured by the one or more image sensors 506, and subsequently uses the machine translation model 530 to translate the text from its original language, as determined by the OCR engine 526, to another language. In some examples, the HMD 502 uses the ASR engine 528 to determine text from soundwaves captured by the one or more audio devices 505, and subsequently uses the machine translation model 530 to translate the text, as determined by the ASR engine 528, from its original language to another language. In either example, the HMD 502 may present the translated text, as determined by the machine translation model 530, at the display 510. In some examples, the machine translation model 530 is stored on the memory 522. Further, the some examples, the machine translation model 530 is implemented in hardware and run on the one or more processors 520.

In some examples, the machine translation model 530 is designed to support translation from one language to another language, and vice versa. Also, the machine translation model 530 may be trained on various scenarios, some of which will be shown and described below by way of example. The training of the machine translation model 530 is designed to provide enhanced learning, thus improving translation capability and accuracy. Also, subsequent to the training, the machine translation model 530 may be loaded on to the HMD 502 (e.g., on the memory 522). As a result, the machine translation model 530 may run on the HMD 502, thus maximizing user privacy by refraining from providing obtained user language to an external server or other external depository. Also, in some examples, the machine translation model 530 functions as the sole translation model. Beneficially, the machine translation model 530 may minimize memory usage on the memory 522. Moreover, the machine translation model 530 minimize processing usage by the one or more processors 520, which may allow the HMD 502 to simultaneously carry out other functions on the one or more processors 520 as well as minimize usage of a power supply 532 (e.g., battery, rechargeable battery) of the HMD 502.

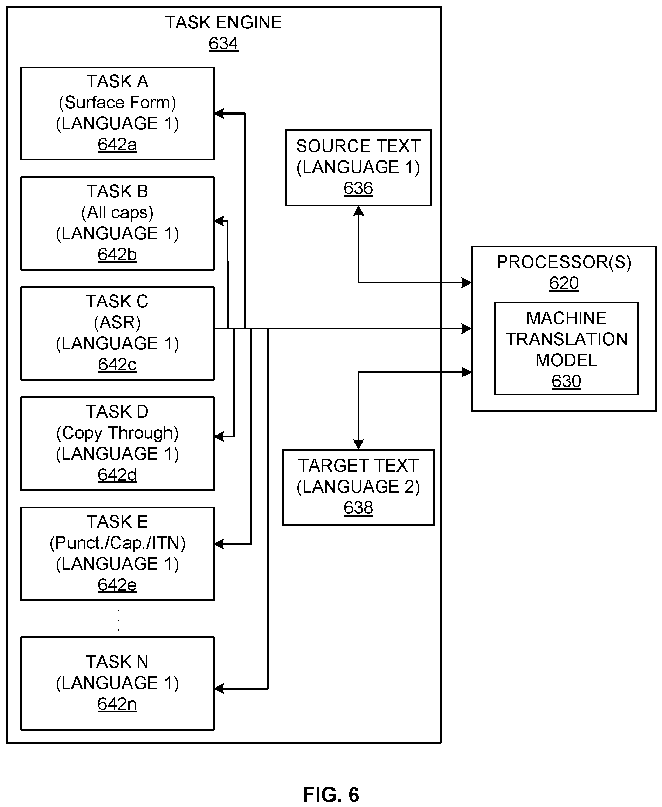

FIG. 6, FIG. 7, FIG. 8, FIG. 9, FIG. 10, FIG. 11, and FIG. 12 show and describe various examples of tasks used with a training dataset that includes source text used to train a machine translation model (e.g., machine translation model 530) that may be implemented in an HMD. Each of the exemplary source texts, along with variations of the source texts generated by the tasks, may be used as datasets to train a machine translation model. Also, while examples shown and described herein refer to language in English and Spanish, several different languages other than English and Spanish may be used to train a machine translation model shown and/or described herein. For purposes of illustration and not of limitation, for example, a non-exclusive list may include German, French, Korean, Japanese, Hindi, Russian, Chinese, Portuguese, Vietnamese, Farsi, and Arabic.

FIG. 6 illustrates a block diagram showing a task engine 634. As shown, the task engine 634 includes a source text 636, which may be provided in a language (e.g., Language 1). The task engine 634 may be implemented in hardware or software. In some examples, the source text 636 takes the form of one or more words, combined in a word sequence to form a phrase or a sentence. In some examples, the source text 636 includes capitalized letters and/or punctation. In other examples, the source text 636 includes no capitalized letters and/or no punctation. The task engine 634 may further include a target text 638 provided as translated text (e.g., Language 2) of the source text 636. Further, the target text 638 may provide a correct or intended translation of the source text 636.

In order for a machine translation model 630 to be trained by the task engine 634, the machine translation model 630 may use the task engine 634 to duplicate the source text 636 and convert, or modify, the source text 636 based on different tasks from the task engine 634. The machine translation model 630 may be implemented in hardware or software. For example, as shown in FIG. 6, the machine translation model 630 may be implemented on one or more processors 620. Each task of the task engine 634 may include a tool that modifies, or changes, the source text 636 in some manner. As shown, the task engine 634 may include a task 642a (Task A, Surface Form), a task 642b (Task B, All Caps), a task 642c (Task C, ASR), a task 642d (Task D, Copy Through), a task 642e (Task E, Punctuation/Capitalization/Inverse Text Normalization (ITN)), and a task 642n (Task N). Accordingly, the task engine 634 may represent n different text modes, resulting in n datasets, where (in this example scenario) n is an integer greater than five. Each of the tasks 642a, 642b, 642c, 642d, 642e, and 642n may include a modification to the source text 636, while remaining in the same language (e.g., Language 1) as that of the source text 636.

Also, the task engine 634 may train the machine translation model 630 to map each of the tasks 642a, 642b, 642c, 642d, 642e, and 642n to the target text 638. As a result, a machine translation model 630 may learn n variations of the source text 636, with each of the n variations of mapped language to the target text 638. In this regard, the machine translation model 630, once trained, may be provided with the source text 636 or beneficially, the machine translation model 630 is trained by being exposed to the source text 636 in a variety of different formats, as opposed to simply training the machine translation model 630 by mapping the source text 636 (with no variations) to the target text 638.

By training the machine translation model 630 with the task engine 634, the machine translation model 630 may learn n different variations of the source text 636. When the machine translation model 630 is implemented in a head-mounted display and tasked with translating a word sequence, the machine translation model 630 is trained on multiple variations (e.g., tasks 642a, 642b, 642c, 642d, 642e, and 642n) of prior text (e.g., source text 636) of text. As a result, text detected by an HMD and provided to the machine translation model 630 may include similarities to one or more variations of trained text, thus increasing the likelihood of accurately translating, by the machine translation model 630, the source text 636 into the target text 638.

Also, once the machine translation model 630 is trained with the source text 636, a new source text is used. When the machine translation model 630 is trained several sets of source text, the machine translation model 630 may be loaded onto an HMD shown and/or described herein. Also, the machine translation model 630 may be trained evenly among each of the tasks 642a, 642b, 642c, 642d, 642e, and 642n. Put another way, the training data may be provided evenly to the machine translation model 630 such that each of the tasks 642a, 642b, 642c, 642d, 642e, and 642n provides 1/n of the total training datasets.

Additionally, by training the machine translation model 630 with several tasks similar and in addition to the task engine 634, the machine translation model 630 may learn to identify the language (e.g., Language 1 or Language 2) of the text in a real-world environment without being instructed which language of the text is. As a result, when an HMD provides the machine translation model 630 with the text from the real-world environment, the machine translation model 630 may identify the language (e.g., Language 1) and translate the language to another language (e.g., Language 2) without receiving instructions or commands to translate the text to another language.

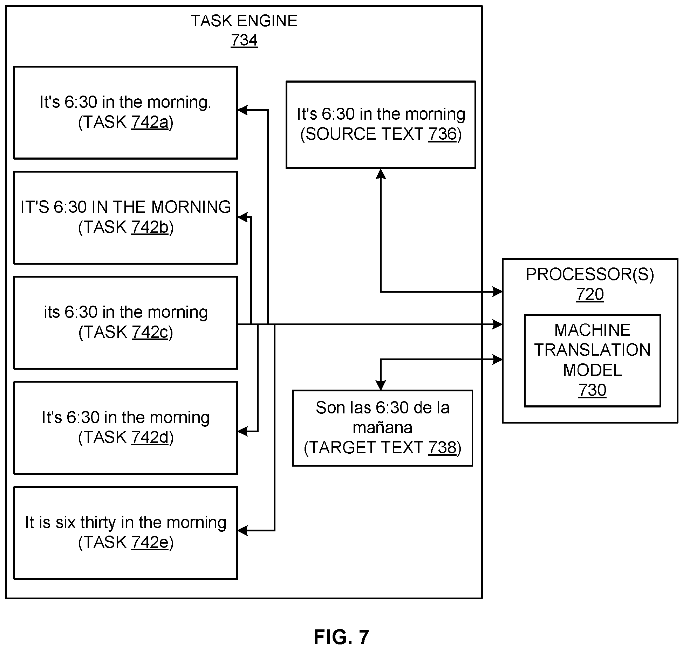

FIG. 7 illustrates a block diagram showing a task engine 734. As shown, the task engine 734 includes a source text 736 that reads, "It's 7:30 in the morning" as well as a target text 738 that reads, "Son las 7:30 de la mañana" Accordingly, the source text 736 may be provided in a language (e.g., English) and a target text 738 may be provided in a different language (e.g., Spanish), with the target text 738 representing a correct and intended translation of the source text 736.

The task engine 734 may further include several tasks, representing multiple different modes used to train a machine translation model 730 to convert the source text 736 into a variation of the source text 736. The machine translation model 730 may be implemented in hardware or software. For example, as shown in FIG. 7, the machine translation model 730 may be implemented on one or more processors 720.

The task engine 734 may include a task 742a that takes the form of a surface form text mode. As shown, the task 742a may provide a similar format as that of the source text 736. However, the task 742a may provide punctuation, such as a period (.), at the end of the source text 736.

The task engine 734 may further include a task 742b that takes the form of an all capitalization, or all caps, text mode. The phrase "all capitalization" as used herein may refer to an upper case format for each letter of each word in a phrase or sentence of the source text 736. Accordingly, the task 742b may modify the source text 736 by capitalizing each letter of the source text 736.

The task engine 734 may further include a task 742c that takes the form of an ASR text mode. The task 742c may modify the source text 736 by emulating how the source text 736 would appear when translated from an ASR engine. In this regard, the task 742c may modify the source text 736 by text normalization, thus causing a removal of capitalization and punctuation. The phrase "removal of capitalization" as used herein may refer to a lower case format for each letter of each word in a phrase or sentence of the source text 736. Alternatively, the task 742c may modify the text generated by the task 742a (e.g., surface form text mode).

The task engine 734 may further include a task 742d that takes the form of a copy through text mode. The task 742d may provide a duplicate, or copy, of the source text 736.

The task engine 734 may further include a task 742e that takes the form of a punctuation, capitalization, and inverse text normalization mode. In this regard, the task 742e may modify the source text 736 by providing punctuation, capitalization, and inverse text normalization to the source text 736. Regarding inverse text normalization, the task 742e may modify a number (e.g., "6:30") in the source text 736 to its written form (e.g., "six thirty"). Additionally, inverse text normalization of the task 742e may modify a contraction (e.g., "It's") in the source text 736 by providing the contraction in its long form (e.g., "It is").

Using the variations provided by the task engine 734, the task engine 734 may train the machine translation model 730 to derive multiple (e.g., five in this example) variations of the source text 736, each of which is mapped to the target text 738. Beneficially, the machine translation model 730, when implemented in an HMD, may be trained to understand words, phrases, and sentences faster and more accurately based on being previously trained on variations of the source text 736.

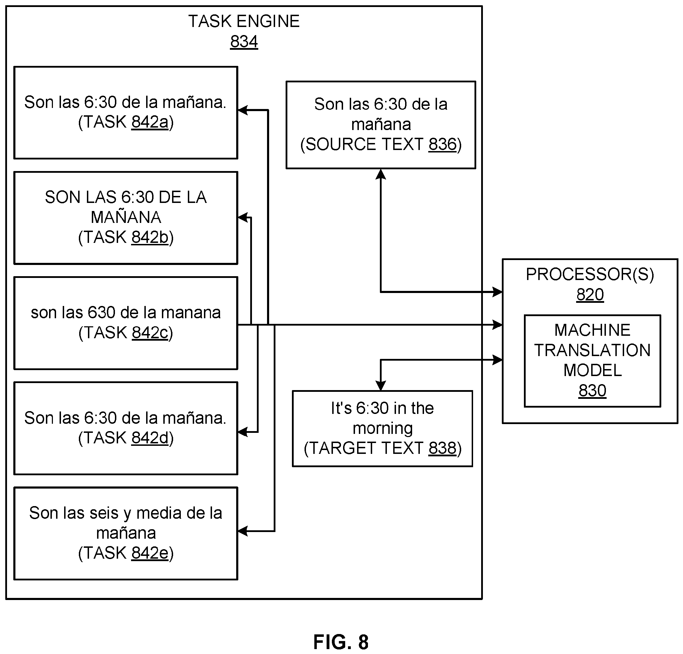

FIG. 8 illustrates a block diagram showing a task engine 834. In order for the task engine 834 to train a machine translation module 830 to be a bilingual machine translation mode, the source text and target text may be reversed. For example, the task engine 834 may include a source text 836 (similar to the target text 738 in FIG. 7) and a target text 838 (similar to the source text 736 in FIG. 7). In this regard, for example, the task engine 834 may provide a Spanish-to-English translation, whereas the task engine 734 (shown in in FIG. 7) provides an English-to-Spanish translation. The machine translation model 830 may be implemented in hardware or software. For example, as shown in FIG. 8, the machine translation model 830 is implemented on one or more processors 820.

The task engine 834 may include tasks used to modify the source text 836. Each task of the task engine 834 shown in FIG. 8 may be similar to those shown and described for the task engine 734 (shown in FIG. 7). However, the task engine 834 may modify the source text 836 in a different language. For example, the task engine 834 may include a task 842a that takes the form of a surface form text mode, thus providing punctuation, such as a period (.), at the end of the source text 836. The task engine 834 may further include a task 842b that takes the form of an all capitalization, or all caps, text mode, thus capitalizing each letter of each word of the source text 836. The task engine 834 may further include a task 842c that takes the form of an ASR text mode, thus modifying the source text 836 by emulating how the source text 836 would appear when translated from an ASR engine. Alternatively, the task 842c may modify the text generated by the task 842a (e.g., surface form text mode). The task engine 834 may further include a task 842d that takes the form of a copy through text mode, thus providing a duplicate of the source text 836. The task engine 834 may further include a task 842e that takes the form of a punctuation, capitalization, and inverse text normalization mode, thus modifying a number (e.g., "6:30") in the source text 836 to its written form (e.g., "seis y media").

In addition to training a machine translation model on multiple languages, the tasks may also train a machine translation model on language context and translation. For example, the source text 836 begins with "Son las." In one language (e.g., Spanish), the word "son" in conjunction with "las" may be translated as "It's" or "It is." However, in another language (e.g., English), the same word (e.g., "son") may refer to a male child of a parent. By training a machine translation model in both languages, the machine translation model may be trained to identify a word and may combine the word with one or more nearby words in a word sequence of the source text, and may determine the correct language based on the word combination.

FIGS. 7 and 8 illustrate bilingual training for a machine translation model by providing the source text in two different languages and the target text in two different languages. The foregoing examples show and describe tasks in which translation is shown in one direction, e.g., from one language to another language. However, while not expressly shown in the foregoing examples, it should be noted that complementary tasks provide for translations in two directions, e.g., translation from one language to another language and vice versa.

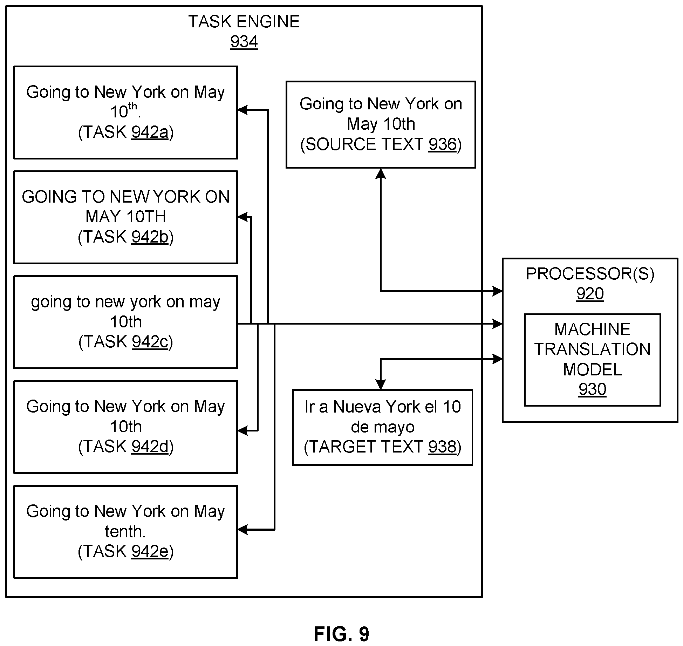

FIG. 9 illustrates a block diagram showing a task engine 934. As shown, the task engine 934 includes a source text 936 that reads "Going to New York on May 10th" and a target text 938 that reads "Ir a Nueva York el 10 de mayo."

The task engine 934 may be used to modify the source text 936. The task engine 934 shown in FIG. 9 may be similar to those shown and described for the task engine 734 (shown in FIG. 7). Accordingly, the task engine 934 may include a task 942a that takes the form of a surface form text mode, thus providing punctuation, such as a period (.), at the end of the source text 936. Additionally, the task 942a may modify the suffix "th" by, for example, formatting in a superscript format. The task engine 934 may further include a task 942b that takes the form of an all capitalization, or all caps, text mode, thus capitalizing each letter of each word of the source text 936. The task engine 934 may further include a task 942c that takes the form of an ASR text mode, thus modifying the source text 936 by emulating how the source text 936 would appear when translated from an ASR engine. Alternatively, the task 942c may modify the text generated by the task 942a (e.g., surface form text mode). The task engine 934 may further include a task 942d that takes the form of a copy through text mode, thus providing a duplicate of the source text 936. The task engine 934 may further include a task 942e that takes the form of a punctuation, capitalization, and inverse text normalization mode, thus modifying a number (e.g., "10th") in the source text 936 to its written form (e.g., "tenth").

Based on the source text 936, the machine translation module 930 may use the task engine 934 to learn differences between two languages. For example, in one language (e.g., English), it may be customary to capitalize the first letter of the month (e.g., "May"), while in another language (e.g., Spanish) the first letter of the month may not be capitalized (e.g., "mayo"). Additionally, in one language (e.g., English), it may be customary for the month to precede the day (e.g., May 10th), while in another language (e.g., Spanish) the day may precede the month (e.g., 10 de mayo). The machine translation model 930 may be implemented in hardware or software. For example, as shown in FIG. 9, the machine translation model 930 may be implemented on/by one or more processors 920.

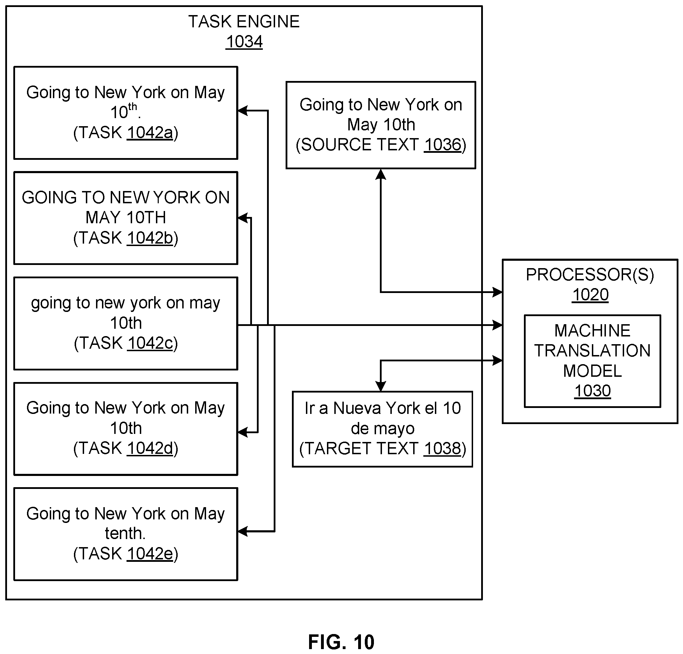

FIG. 10 illustrates a block diagram showing a task engine 1034. As shown, the task engine 1034 includes a source text 1036 that reads "Argentina beat Belgium to advance to the semifinals for the first time in twenty four years." and a target text 1038 that reads "Argentina venció a Bélgica para avanzar a las semifinales por primera vez en veinticuatro años."

The task engine 1034 may include task engine 1034 used to modify the source text 1036. Each of the task engine 1034 shown in FIG. 10 may be similar to those shown and described for the task engine 734 (shown in FIG. 7). Accordingly, the task engine 1034 may include a task 1042a that takes the form of a surface form text mode. As shown, the text generated by the task 1042a is the same text, including format, as the source text 1036. The task engine 1034 may further include a task 1042b that takes the form of an all capitalization, or all caps, text mode, thus capitalizing each letter of each word of the source text 1036. The task engine 1034 may further include a task 1042c that takes the form of an ASR text mode, thus modifying the source text 1036 by emulating how the source text 1036 may appear when translated from an ASR engine. Alternatively, the task 1042c may modify the text generated by the task 1042a (e.g., surface form text mode). As shown, the task 1042c may apply text normalization to the source text 1036, thus changing "twenty four" to "24." The task engine 1034 may further include a task 1042d that takes the form of a copy through text mode, thus providing a duplicate of the source text 1036. The task engine 1034 may further include a task 1042e that takes the form of a punctuation, capitalization, and inverse text normalization mode. As shown, the text generated by the task 1042e is the same text, including format, as the source text 1036.

Based on the source text 1036, the task engine 1034 may train a machine translation model 1030 to learn additional differences between two languages. For example, a machine translation model 1030 trained by the task engine 1034 may learn the spelling of a number spelled out in written form (e.g., "twenty four") is equated to the number itself (e.g., "24"), and vice versa. Without learning from the task engine 1034, a machine translation model 1030 may observe "24" in a real-world environment, and may output "two four" rather than "twenty four." Additionally, the machine translation model 1030 trained by the task engine 1034 may learn to apply accents on words (e.g., "Bélgica" and "años") in one language (e.g., Spanish) that are not accented in another language (e.g., "Belgium" and "years" in English). The machine translation model 1030 may be implemented in hardware or software. For example, as shown in FIG. 10, the machine translation model 1030 may be implemented on/by one or more processors 1020.

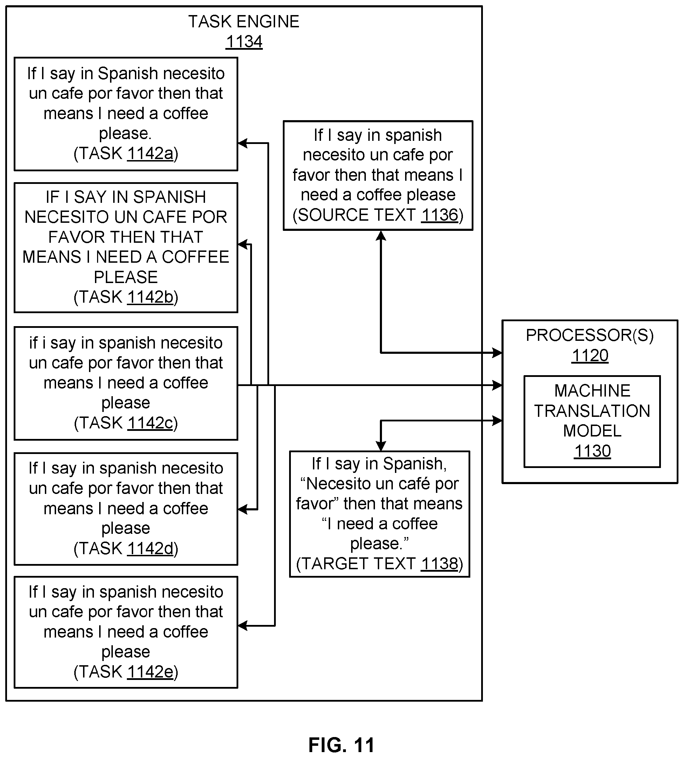

FIG. 11 illustrates a block diagram showing a task engine 1134. As shown, the task engine 1134 includes a source text 1136 that reads "If I say in spanish necesito un cafe por favor then that means I need a coffee please." and a target text 1138 that reads "If I say in Spanish, "Necesito un café por favor" then that means "I need a coffee please." Accordingly, the source text 1136 provided for training a machine translation model 1130 by the task engine 1134 may include two different languages (e.g., English and Spanish). Additionally, the target text 1138 may also be in the same two languages as those of the source text 1136. In order to determine a protocol(s) for translation when two different languages are observed in the source text 1136, the task engine 1134 may train the machine translation model 1130 to use the first word of the source text 1136 as an indicator, or cue, for translation. For example, the source text 1136 includes English and Spanish, and begins with "If". As a result, the task engine 1134 may train the machine translation model 1130 to also begin the target text 1138 in English. Without training from the task engine 1134, the machine translation model 1130 may improperly translate text by, for example, translating each word or incorrectly selecting a word or words for translation. Moreover, additional indicators may be present in the source text 1136 that may be used to train a machine translation model 1130 regarding when to transition from one language to another language. For example, the source text 1136 may include the phrase "in Spanish," which may provide an indicator as to transition from the prior language (e.g., English) to the other language preceded by "in" (e.g., "Spanish"). Thus, "in [Language]" may provide a trigger used to train a machine translation model 1130 when to correctly translate to different languages. Further, an additional phrase may be present in the source text 1136 to train a machine translation model 1130 to transition back to a prior language. For example, the source text 1136 includes "then that means," which may provide an additional indicator used to train a machine translation model 1130 when to cease translating one language (e.g., Spanish) and use the other language (e.g., English). The machine translation model 1130 may be implemented in hardware or software. For example, as shown in FIG. 11, the machine translation model 1130 may be implemented on/by one or more processors 1120.

The task engine 1134 may include several tasks used to modify the source text 1136. The task engine 1134 shown in FIG. 11 may be similar to those shown and described for the task engine 734 (shown in FIG. 7). Accordingly, the task engine 1134 may include a task 1142a that takes the form of a surface form text mode. As shown, the task 1142a may provide a similar format as that of the source text 1136. However, the task 1142a may provide punctuation, such as a period (.), at the end of the source text 1136. The task engine 1134 may further include a task 1142b that takes the form of an all capitalization, or all caps, text mode, thus capitalizing each letter of each word of the source text 1136. The task engine 1134 may further include a task 1142c that takes the form of an ASR text mode, thus modifying the source text 1136 by emulating how the source text 1136 may appear when translated from an ASR engine. Alternatively, the task 1142c may modify the text generated by the task 1142a (e.g., surface form text mode). As shown, the task 1142c may apply text normalization to the source text 1136, thus causing a removal of capitalization and punctuation. The task engine 1134 may further include a task 1142d that takes the form of a copy through text mode, thus providing a duplicate of the source text 1136. Beneficially, by copying through the source text 1136, which is in two languages, the task engine 1134 may train the machine translation model 1130 not to provide an undesired translation of the source text 1136. The task engine 1134 may further include a task 1142e that takes the form of a punctuation, capitalization, and inverse text normalization mode. As shown, the text generated by the task 1142e is the same text, including format, as the source text 1136.

The task engine 1134 may provide an additional benefit for determining whether the desired language when a word is used in two languages but with different meanings. For example, the source text 1136 includes "un," where "un" in Spanish is also an abbreviation for "United Nations" in English. Further, the source text 1136 includes "cafe, which is "coffee" in Spanish and also an abbreviation for "cafeteria" in English. By training the machine translation model 1130 with the task engine 1134, the machine translation model 1130 may be trained to equate "un café" with "a coffee."

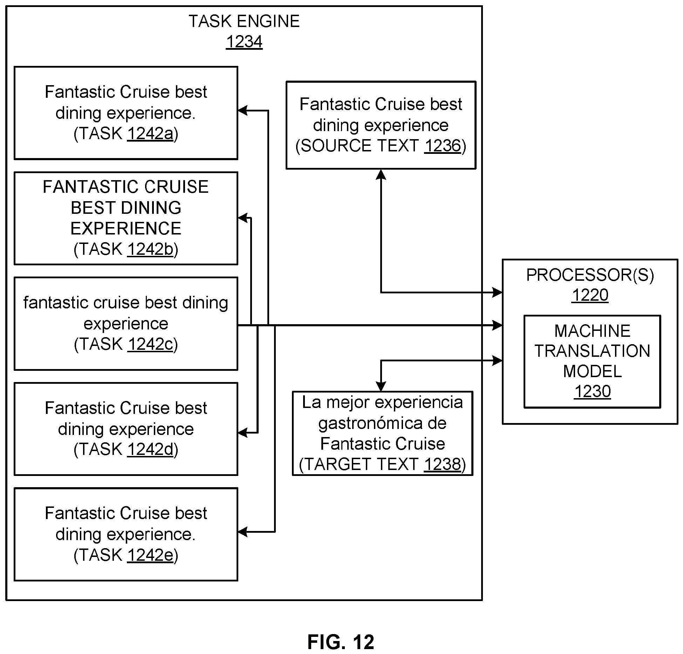

FIG. 12 illustrates a block diagram showing a task engine 1234. As shown, the task engine 1234 includes a source text 1236 that reads "Norwegian Cruise best dining experience" and a target text 1238 that reads "La mejor experiencia gastronómica de Norwegian Cruise".

The task engine 1234 may include several tasks used to modify the source text 1236. Each task of the task engine 1234 shown in FIG. 12 may be similar to those shown and described for the task engine 734 (shown in FIG. 7). Accordingly, the task engine 1234 may include a task 1242a that takes the form of a surface form text mode. As shown, the text generated by task 1242a may be the same text, including format, as the source text 1236. The task engine 1234 may further include a task 1242b that takes the form of an all capitalization, or all caps, text mode, thus capitalizing each letter of each word of the source text 1236. The task engine 1234 may further include a task 1242c that takes the form of an ASR text mode, thus modifying the source text 1236 by emulating how the source text 1236 may appear when translated from an ASR engine. Alternatively, the task 1242c may modify the text generated by the task 1242a (e.g., surface form text mode). The task engine 1234 may further include a task 1242d that takes the form of a copy through text mode, thus providing a duplicate of the source text 1236. The task engine 1234 may further include a task 1242e that takes the form of a punctuation, capitalization, and inverse text normalization mode. As shown, the text generated by the task 1242e may be the same text, including format, as the source text 1236.

Based on the source text 1236, the task engine 1234 may train a machine translation model 1230 to learn when a word sequence is associated with a proper noun (e.g., company) or other proper spelling with capitalization, and thus should not be modified. For example, the phrase "Fantastic Cruise" (referred to herein as a fictitious cruise company) is not translated from English to Spanish as it is a proper noun in the form of a company, and thus appears as "Fantastic Cruise" in both the source text 1236 and the target text 1238. Without learning from the task engine 1234, the machine translation model 1230 may translate "Fantastic Cruise" to "crucero fantastico," which is undesired as "crucero fantastico" may be incorrectly associated with "a cruise that is tremendous" and not the company, Fantastic Cruise. The machine translation model 1230 may be implemented in hardware or software. For example, as shown in FIG. 12, the machine translation model 1230 may be implemented on/by one or more processors 1220.

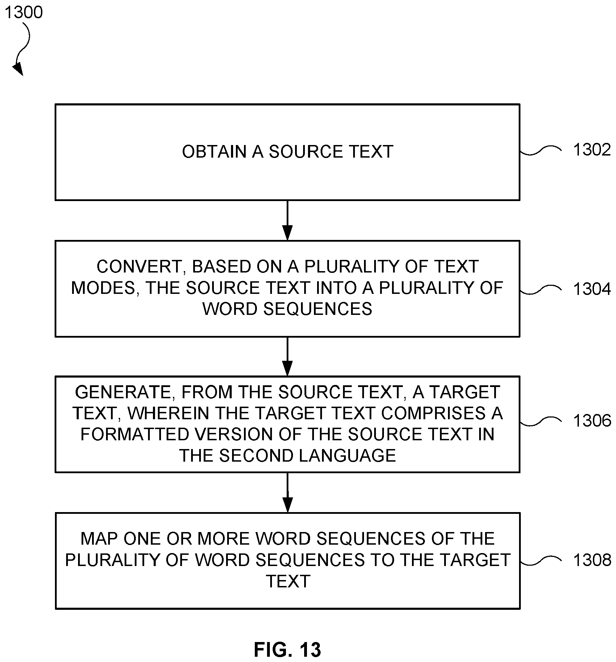

FIG. 13 illustrates an example of a flowchart 1300 illustrating operations for devices that may be carried out by a head-mounted display. At operation 1302, one or more images comprising text in a first language is obtained from an image sensor. As a non-limiting example, the one or more image sensor may include one or more cameras. At operation 1304, the machine translation model is instructed to i) format the text and ii) translate the text from the first language to a second language different from the first language. At operation 1306, the head-mounted display outputs at least one image or at least one video. In one or more implementations, the at least one image or the at least one video comprises the text in the second language.

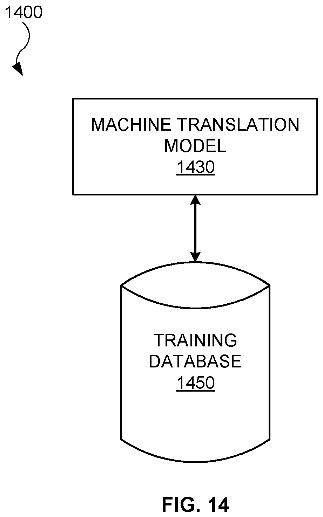

FIG. 14 illustrates an example of a machine learning framework 1400 including machine translation model 1430 and training database 1450, in accordance with one or more examples of the present disclosure. The machine learning framework 1400 may be hosted locally in a computing device or hosted remotely. The training database 1450 may include several tasks (e.g., task engine 634 in FIG. 6, task engine 734 in FIG. 7, task engine 834 in FIG. 8, task engine 934 in FIG. 9, task engine 1034 in FIG. 10, task engine 1134 in FIG. 11, and/or task engine 1234 in FIG. 12). Using the training database 1450, the machine learning framework 1400 may train the machine translation model 1430 to translate received text from one language to another, or vice versa. The machine translation model 1430 may be stored on a computing device. For example, the machine translation model 1430 may reside within an HMD (e.g., HMD 102 shown in FIG. 1, HMD 202 shown in FIG. 2, HMD 302 shown in FIG. 3, HMD 402 shown in FIG. 4, HMD 502 shown in FIG. 5). Additionally, the machine translation model 1430 may be processed by the one or more processors (shown in FIG. 5).

The training database 1450 may include a plurality of training datasets, which may include one or more word sequences in the form of phrases and/or sentences. The one or more word sequences may include labeled and/or unlabeled data. Word sequences may be labeled as including a specific language (e.g., English, Spanish). Word sequences may be unlabeled when it does not include an indication of the language. The labeled training datasets may be used, for example, to train a machine translation model, such as the machine translation model 1430. The unlabeled training datasets may be used, for example, to validate the training. The training database 1450 employed by the machine learning framework 1400 may be fixed or updated periodically.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

The foregoing description of the examples has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the examples in terms of applications and symbolic representations of operations on information. These application descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one example, a software module is implemented with a computer program product comprising a computer-readable medium containing computer program code, which can be executed by a computer processor for performing any or all of the steps, operations, or processes described.

Embodiments also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments also may relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A head-mounted display comprising:
an image sensor;
a machine translation model stored on a memory; and
one or more processors configured to provide one or more commands, wherein the one or more commands comprise:
obtaining, from the image sensor, one or more images comprising text in a first language;
instructing the machine translation model to i) format the text and ii) translate the text from the first language to a second language different from the first language; and
outputting, by the head-mounted display, at least one image or at least one video, wherein the at least one image or the at least one video comprises the text in the second language.

2. The head-mounted display of claim 1, wherein the machine translation model is trained based on:
obtaining a source text;
converting, based on a plurality of tasks, the source text into a plurality of word sequences;
generating, from the source text, a target text, wherein the target text comprises a formatted version of the source text in the second language; and
mapping one or more word sequences of the plurality of word sequences to the target text.

3. The head-mounted display of claim 2, wherein the plurality of tasks comprises:
incorporating punctuation into the source text; and
capitalizing one or more letters of the source text.

4. The head-mounted display of claim 3, wherein the plurality of tasks further comprises:
applying text normalization to the source text; and
generating a copy of the source text;
preferably wherein the plurality of tasks further comprises applying inverse text normalization to the source text.

5. The head-mounted display of any preceding claim, wherein the machine translation model, when executed by the one or more processors, is further configured to, in response to the text being in the first language and the second language, output the text in the first language and the second language.

6. The head-mounted display of claim 5, wherein the machine translation model, when executed by the one or more processors, is further configured to:
determine a first word of the text;
map the first word to a language selected from one of the first language or the second language to generate a mapped language; and
output, by the head-mounted display, the first word in the mapped language.

7. The head-mounted display of any preceding claim, further comprising a speaker, wherein the one or more commands further include outputting, by the speaker, the text in the second language.

8. A method comprising:
obtaining a source text in a first language;
converting, based on a plurality of tasks, the source text into a plurality of word sequences;
generating, from the source text, a target text, wherein the target text comprises a formatted version of the source text in a second language different from the first language; and
mapping one or more word sequences of the plurality of word sequences to the target text.

9. The method of claim 8, wherein the converting the source text into the plurality of tasks comprises modifying, based on the plurality of tasks, the source text to a respective word sequence of the plurality of word sequences.

10. The method of claim 8 or 9, wherein the plurality of tasks comprises:
a first task comprising punctuation in the source text;
a second task comprising a capitalization of one or more letters of one or more words of the source text; and
a third task comprising a lower case of the one or more letters of the one or more words of the source text and removal of the punctuation of the source text.

11. The method of claim 10, wherein the plurality of tasks further comprises a fourth task comprising a copy of the source text;
preferably wherein the plurality of tasks further comprises a fifth task comprising an inverse text normalization of the source text.

12. The method of any of claims 8 to 11, further comprising:
providing the target text to a head-mounted display; and
outputting, by the head-mounted display, the target text;
preferably wherein the obtaining the source text comprises, obtaining, by one or more image sensors of the head-mounted display, an image that comprises the source text.

13. The method of any of claims 8 to 12, wherein the converting the source text into the plurality of word sequences comprises providing a machine translation model of a head-mounted display to convert with a plurality of tasks.

14. A computer-readable medium storing instructions that, when executed by a processor, cause the processor to carry out the method of any of claims 8 to 13.

15. A computer program product comprising instructions which, when the program is executed by a processor of a computer, cause the processor to carry out the method of any of claims 8 to 13.
